# EUROPEAN PATENT SPECIFICATION

(11) **EP 2 904 184 B1**
(45) Date of publication and mention of the grant of the patent: **02.01.2019**
(21) Application number: 12886036.8
(22) Date of filing: 05.10.2012
(51) Int. Cl.: E21B 33/12, E21B 10/25

(54) **WELL TOOL WITH DYNAMIC METAL-TO-METAL SHAPE MEMORY MATERIAL SEAL**
BOHRLOCHWERKZEUG MIT DYNAMISCHER METALL-ZU-METALL-FORMGEDÄCHTNISMATERIALDICHTUNG
OUTIL DE PUITS À JOINT D'ÉTANCHÉITÉ EN MATÉRIAU À MÉMOIRE DE FORME MÉTAL-MÉTAL DYNAMIQUE

(43) Date of publication of application: 12.08.2015
(73) Proprietor: Halliburton Energy Services, Inc., Houston, TX 77072 (US)
(72) Inventor: CARROLL, Sean, Houston, TX 77032 (US); FRIPP, Michael, L., Carrollton, TX 75006 (US)
(74) Representative: Bennett, Adrian Robert J.
(86) International application number: PCT/US2012/059063
(87) International publication number: WO 2014/055089

(56) References cited:
- EP-A1- 1 533 468
- WO-A2-01/38687
- US-A- 4 394 020
- US-A- 4 394 020
- US-A- 4 429 854
- US-A- 4 588 309
- US-A- 4 822 057
- US-A1- 2002 074 742
- US-A1- 2008 264 647

## Description

### TECHNICAL FIELD

This disclosure relates generally to operations performed and equipment utilized in conjunction with subterranean wells and, in one example described below, more particularly provides a well tool with a dynamic metal-to-metal shape memory material seal.

### BACKGROUND

Heat can be generated when elastomeric seals are used to seal against moving parts of well tools. Such heat can deteriorate the seals, so that they no longer adequately provide their sealing function. The generated heat can also damage other components of certain well tools. It will, therefore, be readily appreciated that improvements are continually needed in the art of constructing well tools and providing seals therein.

An example of a well tool with a seal provided therein is disclosed in US 2002/0074742 wherein shape memory alloy (SMA) technology and bi-metallic sealing elements are described which are used to provide compact, reliable superelastic sealing mechanisms, e.g. for use in the oilfield environment.

According to the present invention there is provided a well tool as defined in the appended apparatus claim 1 and method claim 10. Further preferable features of the well tool of the present invention are defined in the appended dependent claims.

### BRIEF DESCRIPTION OF THE DRAWINGS

FIG. 1 is a representative elevational view of a well tool and associated method which can embody principles of this disclosure.
FIG. 2 is a representative cross-sectional view of a portion of the well tool.
FIGS. 3A-D are representative cross-sectional views of a shape memory material seal in a method of sealing in the well tool.
FIGS. 4A-D are representative cross-sectional views of another example of the the shape memory material seal in a method of sealing in the well tool.

### DETAILED DESCRIPTION

The present disclosure generally relates to a well tool as defined by claim 1 and a method of of sealing in a well tool as defined by claim 10. All other configurations are falling outside the scope of the claims.

Representatively illustrated in the drawings is a well tool 10 and associated method which can embody principles of this disclosure. However, it should be clearly understood that the well tool and method are merely one example of an application of the principles of this disclosure in practice, and a wide variety of other examples are possible. Therefore, the scope of this disclosure is not limited at all to the details of the well tool and method described herein and/or depicted in the drawings.

In examples described below, metal-to-metal seals are made at least partially from shape memory material. A superelastic behavior of shape memory materials can be used to minimize or eliminate seal insertion forces, to allow for broader mechanical tolerances on sealing surfaces, to increase sealing capabilities, and to minimize wear in a dynamic seal.

A metal ring seal can be made from a shape memory material material. The shape memory material seal is deformed to provide for easy assembly, with little or no insertion force needed. Heat causes the seal to expand for an energized seal between sealing surfaces.

In one example, the shape memory material seal is deformed, so that it can be readily inserted into a well tool. When heated, the shape memory material returns to its memory shape. The memory shape is preferably a toroidal metal seal ring, although other shapes may be used.

A circular cross-section of the toroidal shape memory seal is an interference fit between the sealing surfaces of the well tool. This interference fit results in the shape memory material seal being in metal-to-metal sealing contact with the well tool sealing surfaces.

The shape memory material seal will maintain this interference fit between the sealing surfaces, even as temperature changes downhole during use of the well tool. The shape memory material seal may have a wall thickness sufficient to withstand fluid pressures exerted on the seal downhole, or the seal may be partially or completely filled with a fluid to prevent its collapse, etc. In other examples, an interior of the seal may be pressure balanced with an exterior on one side (e.g., via a hole or other opening in the side of the seal, etc.). In one example, the seal may have a C-shaped cross-section.

The shape memory material seal can be used as a static or dynamic seal. It is considered that some shape memory material material can have excellent anti-erosion characteristics. In a dynamic seal, there is less likelihood of eroding the shape memory material seal, as compared to an elastomeric seal. For sealing in roller cone drill bits, the reduced heat generation due to metal-to-metal sealing with the shape memory material seal can be an advantage.

The shape memory material is in some examples chosen so that it is in its martensitic phase at room temperature, and is in its austenitic phase at downhole temperatures. In the room temperature martensitic phase, the shape memory material has lower modulus of elasticity and can be plastically deformed. When heated to the austenitic phase, the modulus of the shape memory material can triple, and the material will return to its heat-treated memory shape.

The shape memory material can comprise any of Ni-Ti, Ni-Ti-Nb, Ni-Ti-Hf, Ni-Ti-Pd, Ni-Ti-Zr, Cu-Zr, Ni-Al, Fe-Mn-Si, Cu-Al-Ni, Cu-Zn-Al and Fe-Ni-Co-Ti. Other shape memory material materials may be used, if desired. The shape memory material could in some examples comprise a shape memory polymer (e.g., polyurethanes, other block copolymers, linear amorphous polynorbornene, organic-inorganic hybrid polymers consisting of polynorbornene units that are partially substituted by polyhedral oligosilsesquioxane, etc.) in addition to, or instead of a shape memory alloy.

In one example, a shape memory material material with a large temperature hysteresis may be used. The shape memory material material would be formed in its martensitic phase at room temperature. Upon heating, the material will transform into the high-strength austenitic phase. Due to the large temperature hysteresis, the material will remain in the austenitic phase upon cooling back to room temperature.

In other examples, the shape memory material can be in its martensitic phase both at downhole temperatures, and at surface temperatures. In these examples, the material could remain in its heat-treated memory shape, even after cooling back to its martensitic phase. One advantage to having the shape memory material in its martensitic phase when downhole is that such materials are generally more erosion resistant when they are in their martensitic phase.

If the shape memory material seal is not to be reusable, or if disassembly of the well tool is not needed, then a material with a large temperature hysteresis may be preferred. If the shape memory material seal is to be reused, or if ready disassembly of the well tool is desired, then a material with less temperature hysteresis may be preferred. Examples of shape memory materials with relatively large temperature hysteresis include Ni-Ti-Nb and Ni-Ti-Fe.

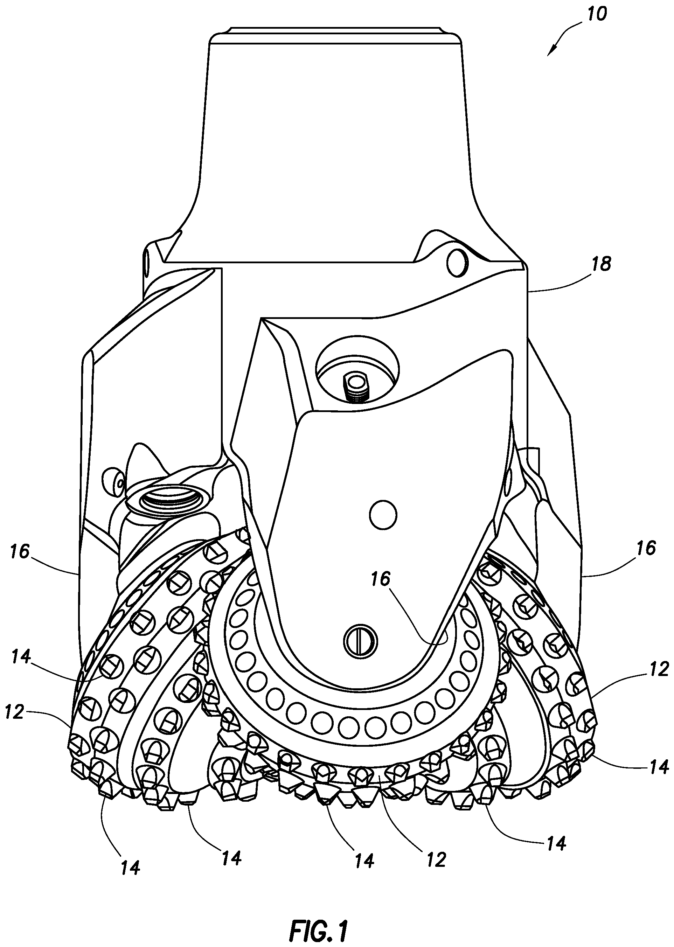

Representatively illustrated in FIG. 1 is a drill bit 10 which can embody principles of this disclosure. The drill bit 10 is of the type known to those skilled in the art as a roller cone bit or a tri-cone bit, due to its use of multiple generally conical shaped rollers or cones 12 having earth-engaging cutting elements 14 thereon.

Each of the cones 12 is rotatably secured to a respective arm 16 extending downwardly (as depicted in FIG. 1) from a main body 18 of the bit 10. In this example, there are three each of the cones 12 and arms 16.

However, it should be clearly understood that the principles of this disclosure may be incorporated into drill bits having other numbers of cones and arms, and other types of drill bits and drill bit configurations. The drill bit 10 depicted in FIG. 1 is merely one example of a wide variety of drill bits and other well tools which can utilize the principles described herein.

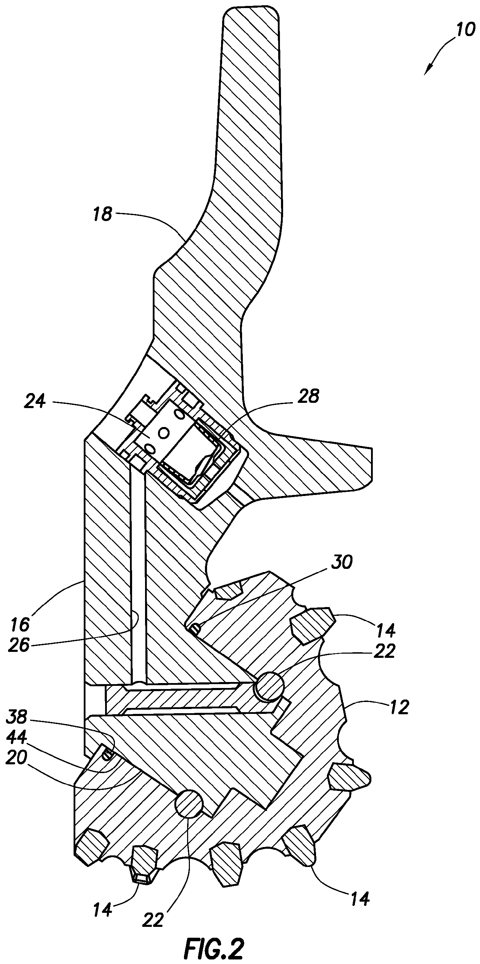

Referring additionally now to FIG. 2, a cross-sectional view of one of the arms 16 is representatively illustrated. In this view it may be seen that the cone 12 rotates about a journal 20 of the arm 16. Retaining balls 22 are used between the cone 12 and the journal 20 to secure the cone on the arm.

Lubricant is supplied to the interface between the cone 12 and the journal 20 from a chamber 24 via a passage 26. A pressure equalizing device 28 ensures that the lubricant is at substantially the same pressure as the downhole environment when the drill bit 10 is being used to drill a wellbore.

A seal 30 is used to prevent debris and well fluids from entering the interface between the cone 12 and the journal 20, and to prevent escape of the lubricant from the interface area. As the cone 12 rotates about the journal 20, the seal 30 preferably rotates with the cone and seals against an outer surface of the journal, as described more fully below. However, in other examples, the seal could remain stationary on the journal 20, with the cone 12 rotating relative to the journal and seal.

The seal 30 in this example comprises a shape memory material and forms metal-to-metals seals between sealing surfaces on each of the journal 20 and cone 12. Such metal-to-metal sealing enhances the capabilities of the seal 30 to exclude debris, reduce wear, prevent escape of lubricant, etc., as well as reducing the heat generated in dynamic sealing. If a shape memory polymer is used, the shape memory polymer can be used to bias a metallic component of the seal 30 into sealing contact.

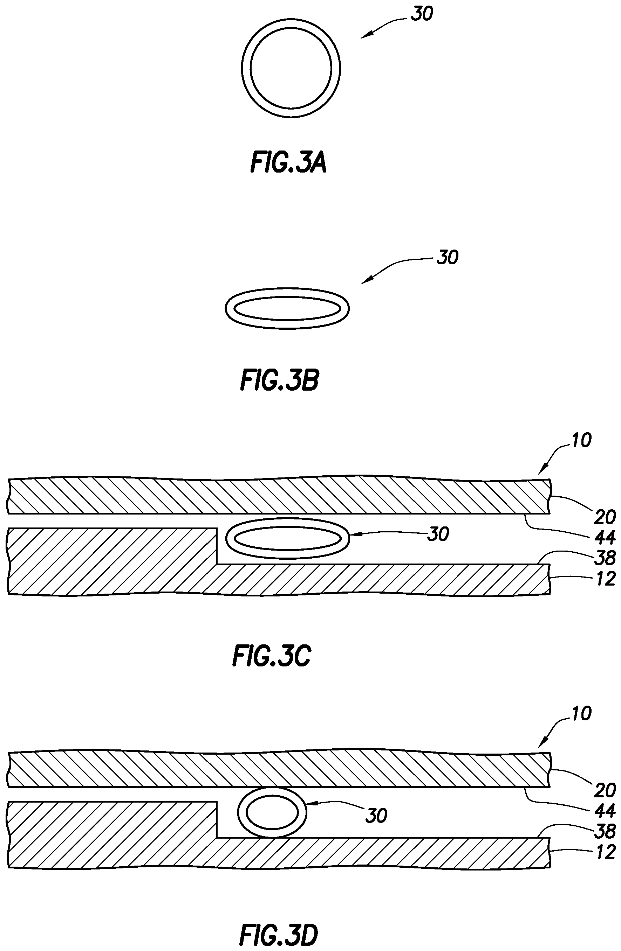

Referring additionally now to FIGS. 3A, an enlarged scale cross-sectional view of one example of the seal 30 is representatively illustrated. In this example, the seal 30 has a memory shape which is a toroid having a circular cross-section. The seal 30 is heat treated, so that the shape memory material thereof is in its martensitic phase at room temperature.

The seal 30 is then deformed, as depicted in FIG. 3B. Preferably, the seal 30 is deformed in manner making it more suitable for ready installation in a well tool, such as the drill bit 10. In this example, a radial width of the seal 30 is decreased, in order to allow the seal to readily fit between the journal 20 and cone 12.

The seal 30 is then installed in the drill bit 10, as depicted in FIG. 3C. Note that, due to the deformation of the seal 30, there preferably is no interference between the seal 30 and sealing surfaces 38, 44 formed on the cone 12 and journal 20. This can reduce or eliminate potential damage to the metal seal 30 due to installation.

The seal 30 is then heated, so that it is transformed to its austenitic phase and expands to (or toward) its memory shape. In FIG. 3D, the seal 30 is depicted as expanded into metal-to-metal sealing contact with each of the sealing surfaces 38, 44. A shape memory polymer material can extend a metal component (such as an outer, erosion resistant layer) of the seal 30 into metal-to-metal sealing contact.

The heating of the seal 30 may be performed during manufacture of the drill bit 10, or it may occur due to downhole temperatures experienced by the drill bit. The scope of this disclosure is no limited to any particular way of heating the seal 30.

Note that the seal 30 could be completely or partially filled with a liquid and/or gas to completely or partially balance fluid pressures exerted on the seal downhole. Alternatively, one or more openings could be provided in a wall of the seal 30 to equalize pressure in the interior of the seal with pressure on one side of the seal.

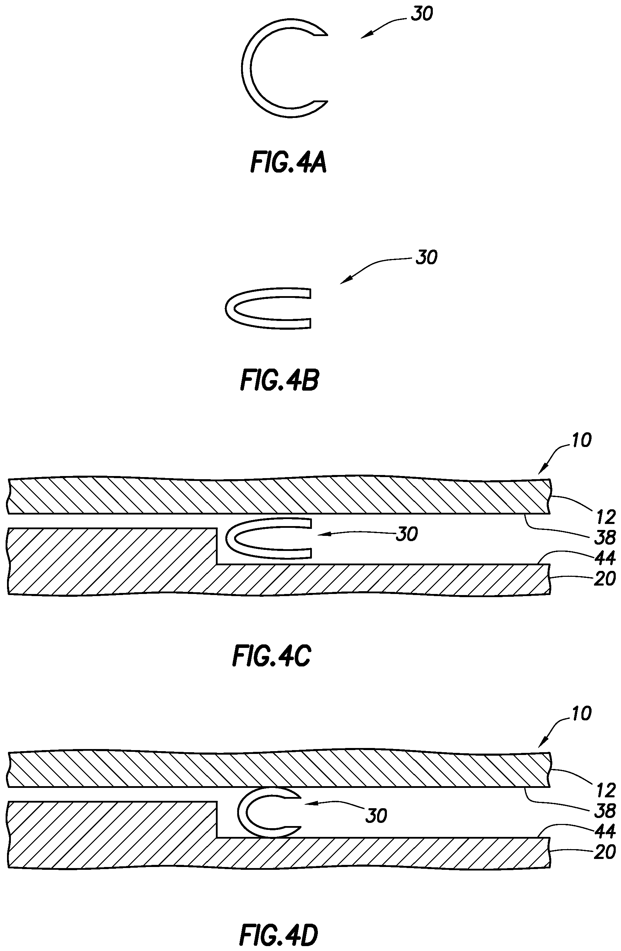

Referring additionally now to FIGS. 4A-D, another configuration of the seal 30 is representatively illustrated. In this configuration, the seal 30 has a generally C-shaped cross-section.

As with the seal 30 of FIGS. 3A-D, the seal of FIGS. 4A-D is formed and heat treated so that it has a certain memory shape in its martensitic phase at room temperature. The seal 30 is then deformed, installed in a well tool, and heated. Upon heating, the seal 30 attempts to return to its memory shape, thereby forming static and/or dynamic metal-to-metal sealing against the sealing surfaces 38, 44.

Alternatively, or in addition, the seal 30 can be used as a backup or redundant seal to another seal, such as an elastomer seal (e.g., an o-ring, etc.). In its expanded downhole condition, the seal 30 will close off an extrusion gap between the surfaces 38, 44 (or other surfaces), thereby mitigating extrusion of the elastomer seal due to a pressure differential across the elastomer seal.

It may now be fully appreciated that the above disclosure provides significant advancements to the art of constructing seals for use in well tools. The seal 30 comprises a metal-to-metal dynamic seal in the drill bit 10, which seal can be readily installed in the drill bit without interference or damage to the seal.

A well tool (e.g., drill bit 10) is provided to the art by the above disclosure. In one example, the well tool can include first and second sealing surfaces 38, 44, and a shape memory material seal 30 which dynamically seals between the first and second sealing surfaces 38, 44 with metal-to-metal contact between the shape memory material seal 30 and each of the first and second sealing surfaces 38, 44.

The shape memory material seal 30 can seal against the first and second sealing surfaces 38, 44 while there is relative displacement between the first and second sealing surfaces 38, 44.

The first sealing surface 38 may be formed on a drill bit cone 12, and the second sealing surface 44 may be formed on a drill bit journal 20. The shape memory material seal 30 can seal between the cone 12 and the journal 20 as the cone 12 rotates about the journal 20.

The shape memory material seal 30 may expand into sealing contact with each of the first and second sealing surfaces 38, 44. The shape memory material seal 30 may expand into sealing contact in response to heat applied to the shape memory material seal 30.

The shape memory material seal 30 may have a generally circular cross-section or a generally C-shaped cross-section. Other shapes may be used in keeping with the scope of this disclosure.

A method of sealing in a well tool is also described above. In one example, the method can comprise: forming a shape memory material seal 30; heat treating the shape memory material seal 30; then deforming the shape memory material seal 30; then installing the shape memory material seal 30 in the well tool; and then heating the shape memory material seal 30, thereby causing the shape memory material seal 30 to expand into metal-to-metal sealing contact with a first sealing surface 38 which displaces relative to the shape memory material seal 30.

A drill bit 10 is provided to the art by the above disclosure. In one example, the drill bit 10 includes first and second sealing surfaces 38, 44 formed on a cone 12 and a journal 20, respectively, of the drill bit 10, and a shape memory material seal 30 which dynamically seals between the first and second sealing surfaces 38, 44 with metal-to-metal contact between the shape memory material seal 30 and each of the first and second sealing surfaces 38, 44.

The shape memory material may comprise a shape memory alloy and/or a shape memory polymer. Heating of the shape memory material may transform the shape memory material to an austenitic phase. However, the shape memory material may be in an austenitic or martensitic phase at downhole temperatures.

Although various examples have been described above, with each example having certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features.

Although each example described above includes a certain combination of features, it should be understood that it is not necessary for all features of an example to be used. Instead, any of the features described above can be used, without any other particular feature or features also being used.

It should be understood that the various embodiments described herein may be utilized in various orientations, such as inclined, inverted, horizontal, vertical, etc., and in various configurations, without departing from the principles of this disclosure. The embodiments are described merely as examples of useful applications of the principles of the disclosure, which is not limited to any specific details of these embodiments.

In the above description of the representative examples, directional terms (such as "above," "below," "upper," "lower," etc.) are used for convenience in referring to the accompanying drawings. However, it should be clearly understood that the scope of this disclosure is not limited to any particular directions described herein.

The terms "including," "includes," "comprising," "comprises," and similar terms are used in a non-limiting sense in this specification. For example, if a system, method, apparatus, device, etc., is described as "including" a certain feature or element, the system, method, apparatus, device, etc., can include that feature or element, and can also include other features or elements. Similarly, the term "comprises" is considered to mean "comprises, but is not limited to."

Of course, a person skilled in the art would, upon a careful consideration of the above description of representative embodiments of the disclosure, readily appreciate that many modifications, additions, substitutions, deletions, and other changes may be made to the specific embodiments, and such changes are contemplated by the principles of this disclosure. For example, structures disclosed as being separately formed can, in other examples, be integrally formed and *vice versa.* Accordingly, the foregoing detailed description is to be clearly understood as being given by way of illustration and example only, the scope of the invention being limited solely by the appended claims and their equivalents.

## Claims

1. A well tool, comprising:
first and second sealing surfaces (38, 44); and
a shape memory material seal (30) which dynamically seals between the first and second sealing surfaces (38, 44) with metal-to-metal contact between the shape memory material seal (30) and each of the first and second sealing surfaces (38, 44)
wherein the shape memory material seal (30) seals against the first and second sealing surfaces (38, 44) while there is relative displacement between the first and second sealing surfaces (38, 44) and **characterized in that**
the shape memory material seal comprises a metal component and a shape memory polymer and said seal is completely or partially filled with a liquid and/or gas to completely or partially balance fluid pressures exerted on the seal downhole.

2. The well tool of claim 1, wherein the first sealing surface (38) is formed on a drill bit cone (12), and wherein the second sealing surface (44) is formed on a drill bit journal (20).

3. The well tool of claim 2, wherein the shape memory material seal (30) seals between the cone (12) and the journal (20) as the cone (12) rotates about the journal (20).

4. The well tool of claim 1, wherein the shape memory material seal (30) expands into sealing contact with each of the first and second sealing surfaces (38, 44).

5. The well tool of claim 1, wherein the shape memory material seal (30) expands into sealing contact in response to heat applied to the shape memory material seal (30).

6. The well tool of claim 1, wherein the shape memory material seal (30) has a generally circular cross-section.

7. The well tool of claim 1, wherein the shape memory material seal (30) has a generally C-shaped cross-section.

8. The well tool of claim 1, wherein the metal component of the shape memory material seal (30) comprises a shape memory alloy.

9. The well tool of claim 1, wherein the shape memory polymer biases the metal component into the metal-to-metal contact with the sealing surfaces.

10. A method of sealing in a well tool, comprising:
forming a shape memory material seal (30);
heat treating the shape memory material seal (30);
then deforming the shape memory material seal (30);
then installing the shape memory material seal (30) in the well tool; and
then heating the shape memory material seal (30), thereby causing the shape memory material seal (30) to expand into metal-to-metal sealing contact with a first sealing surface (38) which displaces relative to the shape memory material seal (30),
wherein the shape memory material seal (30) seals against the first sealing surface and a second sealing surface (38, 44) while there is relative displacement between the first and second sealing surfaces (38, 44) and **characterised in that**
the shape memory material seal (30) comprises a metal component and a shape memory polymer and said seal is completely or partially filled with a liquid and/or gas to completely or partially balance fluid pressures exerted on the seal downhole.

11. The method of claim 10, wherein the forming further comprises forming the shape memory material seal (30) with a generally circular cross-section.

12. The method of claim 10, wherein the forming further comprises forming the shape memory material seal (30) with a generally C-shaped cross-section.

13. The method of claim 10, wherein the first sealing surface is formed on a drill bit cone (12) which rotates about a drill bit journal (20).

14. The method of claim 13, wherein the shape memory material seal (30) also expands into metal-to-metal sealing contact with a second sealing surface formed on the journal (20).

15. The method of claim 14, wherein the shape memory material seal (30) seals against the first and second sealing surfaces (38, 44) while the cone (12) rotates about the journal (20).

16. The method of claim 10, wherein the metal component of the shape memory material seal (30) comprises a shape memory alloy.

17. The method of claim 10, further comprising biasing the metal component into the metal-to-metal contact with the sealing surfaces with the shape memory polymer.

18. The method of claim 10, wherein the heating comprises transforming the shape memory material to an austenitic phase.

## Patentansprüche

1. Bohrlochwerkzeug, das Folgendes umfasst:
eine erste und eine zweite Dichtungsfläche (38, 44); und
eine Formgedächtnismaterialdichtung (30), die dynamisch zwischen der ersten und der zweiten Dichtungsfläche (38, 44) mit einem Metall-zu-Metall-Kontakt zwischen der Formgedächtnismaterialdichtung (30) und jedem von der ersten und der zweiten Dichtungsfläche (38, 44) abdichtet,
wobei die Formgedächtnismaterialdichtung (30) gegen die erste und die zweite Dichtungsfläche (38, 44) abdichtet, während eine relative Verschiebung zwischen der ersten und der zweiten Dichtungsfläche (38, 44) vorhanden ist, und **dadurch gekennzeichnet, dass**
die Formgedächtnismaterialdichtung ein Metallbauteil und ein Formgedächtnispolymer umfasst und die Dichtung vollständig oder teilweise mit einer Flüssigkeit und/oder einem Gas gefüllt ist, um Fluiddrücke, die untertage auf die Dichtung ausgeübt werden, vollständig oder teilweise auszugleichen.

2. Bohrlochwerkzeug nach Anspruch 1, wobei die erste Dichtungsfläche (38) auf einem Bohrerkonus (12) ausgebildet ist, und wobei die zweite Dichtungsfläche (44) auf einem Bohrerlagerzapfen (20) ausgebildet ist.

3. Bohrlochwerkzeug nach Anspruch 2, wobei die Formgedächtnismaterialdichtung (30) zwischen dem Konus (12) und dem Lagerzapfen (20) abdichtet, während der Konus (12) sich um den Lagerzapfen (20) dreht.

4. Bohrlochwerkzeug nach Anspruch 1, wobei die Formgedächtnismaterialdichtung (30) sich in einen Dichtungskontakt mit jeder von der ersten und der zweiten Dichtungsfläche (38, 44) ausdehnt.

5. Bohrlochwerkzeug nach Anspruch 1, wobei die Formgedächtnismaterialdichtung (30) sich als Reaktion auf Wärme, die auf die Formgedächtnismaterialdichtung (30) ausgeübt wird, in einen Dichtungskontakt ausdehnt.

6. Bohrlochwerkzeug nach Anspruch 1, wobei die Formgedächtnismaterialdichtung (30) einen im Allgemeinen kreisförmigen Querschnitt aufweist.

7. Bohrlochwerkzeug nach Anspruch 1, wobei die Formgedächtnismaterialdichtung (30) einen im Allgemeinen C-förmigen Querschnitt aufweist.

8. Bohrlochwerkzeug nach Anspruch 1, wobei das Metallbauteil der Formgedächtnismaterialdichtung (30) eine Formgedächtnislegierung umfasst.

9. Bohrlochwerkzeug nach Anspruch 1, wobei die Formgedächtnismaterialdichtung das Metallbauteil in den Metall-zu-Metall-Kontakt mit den Dichtungsflächen vorspannt.

10. Verfahren zum Abdichten in einem Bohrlochwerkzeug, das Folgendes umfasst:
Bilden einer Formgedächtnismaterialdichtung (30);
Wärmebehandeln der Formgedächtnismaterialdichtung (30);
danach Deformieren der Formgedächtnismaterialdichtung (30);
danach Installieren der Formgedächtnismaterialdichtung (30) in dem Bohrlochwerkzeug; und
danach Erwärmen der Formgedächtnismaterialdichtung (30), wodurch die Formgedächtnismaterialdichtung (30) veranlasst wird, sich in einen Metall-zu-Metall-Dichtungskontakt mit einer ersten Dichtungsfläche (38) auszudehnen, die sich relativ zu der Formgedächtnismaterialdichtung (30) verschiebt,
wobei die Formgedächtnismaterialdichtung (30) gegen die erste Dichtungsfläche und eine zweite Dichtungsfläche (38, 44) abdichtet, während eine relative Verschiebung zwischen der ersten und der zweiten Dichtungsfläche (38, 44) vorhanden ist, und **dadurch gekennzeichnet, dass**
die Formgedächtnismaterialdichtung (30) ein Metallbauteil und ein Formgedächtnispolymer umfasst und die Dichtung vollständig oder teilweise mit einer Flüssigkeit und/oder einem Gas gefüllt ist, um Fluiddrücke, die untertage auf die Dichtung ausgeübt werden, vollständig oder teilweise auszugleichen.

11. Verfahren nach Anspruch 10, wobei das Bilden ferner ein Bilden der Formgedächtnismaterialdichtung (30) mit einem im Allgemeinen kreisförmigen Querschnitt umfasst.

12. Verfahren nach Anspruch 10, wobei das Bilden ferner ein Bilden der Formgedächtnismaterialdichtung (30) mit einem im Allgemeinen C-förmigen Querschnitt umfasst.

13. Verfahren nach Anspruch 10, wobei die erste Dichtungsfläche auf einem Bohrerkonus (12) ausgebildet ist, der sich um einen Bohrerlagerzapfen (20) dreht.

14. Verfahren nach Anspruch 13, wobei die Formgedächtnismaterialdichtung (30) sich ebenfalls in einen Metall-zu-Metall-Dichtungskontakt mit einer zweiten Dichtungsfläche ausdehnt, die auf dem Lagerzapfen (20) ausgebildet ist.

15. Verfahren nach Anspruch 14, wobei die Formgedächtnismaterialdichtung (30) gegen die erste und die zweite Dichtungsfläche (38, 44) abdichtet, während der Konus (12) sich um den Lagerzapfen (20) dreht.

16. Verfahren nach Anspruch 10, wobei das Metallbauteil der Formgedächtnismaterialdichtung (30) eine Formgedächtnislegierung umfasst.

17. Verfahren nach Anspruch 10, ferner umfassend ein Vorspannen des Metallbauteils in den Metall-zu-Metall-Kontakt mit den Dichtungsflächen mit dem Formgedächtnispolymer.

18. Verfahren nach Anspruch 10, wobei das Erwärmen ein Transformieren des Formgedächtnismaterials in eine austenitische Phase umfasst.

## Revendications

1. Outil de puits, comprenant :
des première et seconde surfaces d'étanchéité (38, 44) ; et
un joint d'étanchéité en matériau à mémoire de forme (30) qui assure l'étanchéité de manière dynamique entre les première et seconde surfaces d'étanchéité (38, 44) avec un contact métal-métal entre le joint d'étanchéité en matériau à mémoire de forme (30) et chacune des première et seconde surfaces d'étanchéité (38, 44)
dans lequel le joint d'étanchéité en matériau à mémoire de forme (30) assure l'étanchéité contre les première et seconde surfaces d'étanchéité (38, 44) pendant un déplacement relatif entre les première et seconde surfaces d'étanchéité (38, 44) et **caractérisé en ce que**
le joint d'étanchéité en matériau à mémoire de forme comprend un composant métallique et un polymère à mémoire de forme et ledit joint d'étanchéité est complètement ou partiellement rempli d'un liquide et/ou d'un gaz afin d'équilibrer complètement ou partiellement les pressions de fluide exercées sur le joint d'étanchéité en fond de trou.

2. Outil de puits selon la revendication 1, dans lequel la première surface d'étanchéité (38) est formée sur un cône de trépan (12), et dans lequel la seconde surface d'étanchéité (44) est formée sur un tourillon de trépan (20).

3. Outil de puits selon la revendication 2, dans lequel le joint d'étanchéité en matériau à mémoire de forme (30) assure l'étanchéité entre le cône (12) et le tourillon (20) lorsque le cône (12) tourne autour du tourillon (20).

4. Outil de puits selon la revendication 1, dans lequel le joint d'étanchéité en matériau à mémoire de forme (30) se dilate en contact d'étanchéité avec chacune des première et seconde surfaces d'étanchéité (38, 44).

5. Outil de puits selon la revendication 1, dans lequel le joint d'étanchéité en matériau à mémoire de forme (30) se dilate en contact d'étanchéité en réponse à de la chaleur appliquée au joint d'étanchéité en matériau à mémoire de forme (30) .

6. Outil de puits selon la revendication 1, dans lequel le joint d'étanchéité en matériau à mémoire de forme (30) a une section transversale généralement circulaire.

7. Outil de puits selon la revendication 1, dans lequel le joint d'étanchéité en matériau à mémoire de forme (30) a une section transversale généralement en forme de C.

8. Outil de puits selon la revendication 1, dans lequel le composant métallique du joint d'étanchéité en matériau à mémoire de forme (30) comprend un alliage à mémoire de forme.

9. Outil de puits selon la revendication 1, dans lequel le polymère à mémoire de forme sollicite le composant métallique en contact métal-métal avec les surfaces d'étanchéité.

10. Procédé d'étanchéité dans un outil de puits, comprenant :
la formation d'un joint d'étanchéité en matériau à mémoire de forme (30) ;
le traitement thermique du joint d'étanchéité en matériau à mémoire de forme (30) ;
puis la déformation du joint d'étanchéité en matériau à mémoire de forme (30) ;
puis l'installation du joint d'étanchéité en matériau à mémoire de forme (30) dans l'outil de puits ; et
ensuite le chauffage du joint d'étanchéité en matériau à mémoire de forme (30), amenant ainsi le joint d'étanchéité en matériau à mémoire de forme (30) à se dilater en contact d'étanchéité métal-métal avec une première surface d'étanchéité (38) qui se déplace par rapport au joint d'étanchéité en matériau à mémoire de forme (30),
dans lequel le joint d'étanchéité en matériau à mémoire de forme (30) assure l'étanchéité contre la première surface d'étanchéité et une seconde surface d'étanchéité (38, 44) pendant un déplacement relatif entre les première et seconde surfaces d'étanchéité (38, 44) et **caractérisé en ce que** le joint d'étanchéité en matériau à mémoire de forme (30) comprend un composant métallique et un polymère à mémoire de forme et ledit joint d'étanchéité est complètement ou partiellement rempli d'un liquide et/ou d'un gaz afin d'équilibrer complètement ou partiellement les pressions de fluide exercées sur le joint d'étanchéité en fond de trou.

11. Procédé selon la revendication 10, dans lequel la formation comprend en outre la formation du joint d'étanchéité en matériau à mémoire de forme (30) avec une section transversale généralement circulaire.

12. Procédé selon la revendication 10, dans lequel la formation comprend en outre la formation du joint d'étanchéité en matériau à mémoire de forme (30) avec une section transversale généralement en forme de C.

13. Procédé selon la revendication 10, dans lequel la première surface d'étanchéité est formée sur un cône de trépan (12) qui tourne autour d'un tourillon de trépan (20).

14. Procédé selon la revendication 13, dans lequel le joint d'étanchéité en matériau à mémoire de forme (30) se dilate également en contact d'étanchéité métal-métal avec une seconde surface d'étanchéité formée sur le tourillon (20).

15. Procédé selon la revendication 14, dans lequel le joint d'étanchéité en matériau à mémoire de forme (30) assure l'étanchéité contre les première et seconde surfaces d'étanchéité (38, 44) pendant que le cône (12) tourne autour du tourillon (20).

16. Procédé selon la revendication 10, dans lequel le composant métallique du joint d'étanchéité en matériau à mémoire de forme (30) comprend un alliage à mémoire de forme.

17. Procédé selon la revendication 10, comprenant en outre la sollicitation du composant métallique en contact métal-métal avec les surfaces d'étanchéité avec le polymère à mémoire de forme.

18. Procédé selon la revendication 10, dans lequel le chauffage comprend la transformation du matériau à mémoire de forme en une phase austénitique.
